# EUROPÄISCHE PATENTSCHRIFT

(11) **EP 2 689 920 B1**
(45) Veröffentlichungstag und Bekanntmachung des Hinweises auf die Patenterteilung: **12.08.2015**
(21) Anmeldenummer: 13172606.9
(22) Anmeldetag: 19.06.2013
(51) Int. Cl.: B29D 30/06, B29C 45/34, B29C 45/43, B29C 33/10, B29C 35/02, B29C 33/46, B29C 37/00

(54) **Verfahren und Vorrichtung zur Unterstützung des Entformens eines vulkanisierten Fahrzeugluftreifens**
Method and device for supporting the demoulding of a vulcanised pneumatic tyre for a vehicle
Procédé et dispositif de soutien de la déformation d'un pneumatique de véhicule vulcanisé

(30) Priorität: 26.07.2012 DE 102012106809
(43) Veröffentlichungstag der Anmeldung: 29.01.2014
(73) Patentinhaber: Continental Reifen Deutschland GmbH, 30165 Hannover (DE); SNE Deshors Moulage, 19107 Brive la Gaillarde - Cedex (FR)
(72) Erfinder: Rapin, Marc, 57510 Ernestviller (FR); Wirrig, Jean Pierre, 57800 Béning (FR); Gross, Denis, 57915 Woustviller (FR); Paterne, Gilles, 19240 Allassac (FR); Saigne, Alain, 19520 Mansac (FR)
(74) Vertreter: Widjaja, Wira

(56) Entgegenhaltungen:
- DE-A1- 2 210 099
- DE-C1- 19 543 276
- JP-A- 2005 047 202
- JP-A- 2007 118 460
- US-A- 4 895 502

## Beschreibung

Die Erfindung betrifft ein Verfahren zur Unterstützung des Entformens eines vulkanisierten Fahrzeugluftreifens aus einer Vulkanisationsform mit den profilierten Laufstreifen formenden Formsegmenten aus jeweils einem Segmentschuh und einem mit diesem verbundenen Profileinsatz, welcher mit einer Vielzahl von Entlüftungsbohrungen versehen ist, wobei unmittelbar vor dem Öffnen der Vulkanisationsform bzw. der Formsegmente durch die Entlüftungsbohrungen in Richtung vulkanisiertem Reifen unter Druck ein gasförmiges Medium geleitet wird. Die Erfindung betrifft ferner eine Vorrichtung zur Unterstützung des Entformens eines vulkanisierten Fahrzeugluftreifens aus einer Vulkanisationsform mit den profilierten Laufstreifen formenden Formsegmenten aus jeweils einem Segmentschuh und einem mit diesem verbundenen Profileinsatz, welcher mit einer Vielzahl von Entlüftungsbohrungen versehen ist, wobei in den Formsegmenten jeweils ein Entlüftungskanalnetz vorgesehen ist, durch welches ein gasförmiges Medium unter Druck durch Entlüftungsbohrungen an die Grenzfläche zum Riefen leitbar ist.

Beim Entformungsvorgang eines fertig vulkanisierten Fahrzeugluftreifens sind relativ hohe Kräfte aufzubringen, um ein Lösen des Reifens von den Profileinsätzen zu ermöglichen. Eine der Ursachen für die Entformungskräfte ist die aufgrund chemischer Bindungen verursachte Adhäsion zwischen der Innenfläche der Profileinsätze und der Außenfläche des vulkanisierten Gummis des Reifens. Darüber hinaus erschweren die erforderlichen Verformungen des vulkanisierten Gummimaterials beim Herausziehen von Formstegen und Lamellen das Entformen des Laufstreifens des Reifens. Die zum Entformen aufzubringenden Kräfte können, je nach der Profilierung des Laufstreifens und je nach der verwendeten Gummimischung, ausgesprochen groß sein und auch zu Beschädigungen des Reifens führen.

Aus der JP-A-2006-341415 ist es bekannt, in die in der Vulkanisationsform vorgesehenen Entlüftungsbohrungen nach dem Vulkanisationsvorgang Druckluft einzubringen, um das Ablösen des fertig vulkanisierten Reifens von den Profileinsätzen zu erleichtern. Aus der DE 10 2008 055 532 A1 ist es bekannt, Druckluft oder ein anderes geeignetes unter Druck gesetztes Gas den Entlüftungsbohrungen selektiv zuzuführen, sodass beispielsweise an bestimmten Grenzbereichen Reifen/Formsegment unter Druck gesetztes Gas zugeführt wird, während an anderen Grenzflächenbereichen eine Zuführung unterbleibt.

Aus dem gattungsbildenden US 4,895,502 A ist eine zweiteilige Vulkanisationsform mit einer oberen und einer unteren Formhälfte sowie einem oberen und einem unteren Laufstreifenring bekannt. Zwischen jeder Laufstreifenringhälfte und der zugehörigen Formhälfte ist ein Hohlraum belassen, in welchem jeweils unter Druck ein gasförmiges Medium einleitbar ist, um durch die Entlüftungsbohrungen hindurch das Ablösen des fertigen vulkanisierten Reifens von den Profilringen zu unterstützen. Aus der DE 195 43 276 C1 ist eine Vulkanisationsform für Reifen bekannt, welche eine Vielzahl von Entlüftungsbohrungen aufweist, wobei jede Entlüftungsbohrung ein Ventil enthält, das derart gestaltet ist, dass es beim Herannahen der Rohlingsoberfläche geschlossen und beim Entformen wieder geöffnet wird. Die DE 22 10 099 A1 beschreibt ein Verfahren zur Ausformung eines Fahrzeugluftreifens, bei dem durch einen Evakuiervorgang die zwischen dem auszuformenden Reifenrohling und der ihn aufnehmenden mehrteiligen Vulkanisationsform eingeschlossene Luft entfernt wird. Dabei wird ein außerhalb des Forminnenraums gelegener Sammelraum nach dem Schließen der Vulkanisationsform an eine Vakuumquelle angeschlossen und das Vakuum zumindest über einen Teil der Heizzeit aufrechterhalten. Aus der JP 2007 118 460 A ist es bekannt, nach dem Vulkanisieren des Reifens unmittelbar vor dem Öffnen der Vulkanisationsform in die Entlüftungsbohrungen der Vulkanisationsform von innen her Druckluft zu leiten, um die Entlüftungsbohrungen zu reinigen. Die JP 2005 047 202 A befasst sich mit Maßnahmen, welche die über die Entlüftungsbohrungen beim Einformen des Reifens entweichende Luft abführen.

Der Erfindung liegt die Aufgabe zugrunde, ein Verfahren und eine Vorrichtung der eingangs genannten Art zur Verfügung zu stellen, welche es mit einfachen und zweckmäßigen Maßnahmen gestatten, mittels eines unter Druck durch die Entlüftungsbohrungen geleiteten gasförmigen Mediums den Entformungsvorgang wirkungsvoll zu unterstützen. Diese Maßnahmen sollen vor allem für Formsegmente, die in den Profileinheiten Entlüftungsbohrungen mit eingebautes Entlüftungseinheiten aufweisen, besonders geeignet sein.

Was das Verfahren betrifft, wird die gestellte Aufgabe erfindungsgemäß dadurch gelöst, dass das unter Druck zugeführte Medium über ein zwischen dem Segmentschuh und dem Profileinsatz gebildeten Entlüftungskanalnetz in einem Entlüftungsbohrungsfeld verteilt wird, *wobei der Profileinsatz bis auf jene Bereiche, wo das Entlüftungskanalnetz verläuft, mit seiner Außenfläche in Kontakt mit der Innenfläche des Segmentschuhs steht, und wobei das Entlüftungsbohrungsfeld* von einer umlaufenden, den Profileinsatz gegenüber dem Segmentschuh abdichtenden Dichtung begrenzt ist.

Was die Vorrichtung betrifft, wird die gestellte Aufgabe erfindungsgemäß dadurch gelöst, dass das Entlüftungskanalnetz zwischen dem Profileinsatz und dem Segmentschuh ausgebildet ist, *wobei der Profileinsatz bis auf jene Bereiche, wo das Entlüftungskanalnetz verläuft, mit seiner Außenfläche in Kontakt mit der Innenfläche des Segmentschuhs steht, und wobei das Entlüftungskanalnetz* von einer ein Entlüftungsbohrungsfeld umlaufenden, den Profileinsatz gegenüber dem Segmentschuh abdichtenden Dichtung begrenzt ist.

Die Erfindung zeigt daher eine auf einfache Weise realisierbare Möglichkeit auf, ein Entlüftungsbohrungsfeld in einem Formsegment des Segmentringes mit einem unter Druck zugeführten gasförmigen Medium zu versorgen, ohne dass ein Druckverlust eintritt, sodass die Entformung des Reifens wirkungsvoll unterstützt werden kann.

Besonders einfach und unproblematisch lässt sich das erfindungsgemäße Verfahren mit Druckluft als gasförmiges Medium durchführen.

Das erfindungsgemäße Verfahren ist besonders vorteilhaft bei Entlüftungsbohrungen, in welche Entlüftungseinheiten eingesetzt sind. Wie bekannt verschließen die Entlüftungseinheiten bei eingeformten Reifen und während der Vulkanisation des Reifens die Entlüftungsbohrungen an der Innenseite der Profileinsätze. Durch das unter Druck eingeleitete gasförmige Medium werden sie nach der Vulkanisation des Reifens und unmittelbar vor oder während des Einleitens des Öffnens der Vulkanisationsform geöffnet.

Zum Unterstützen des Entformungsvorganges hat sich als besonders günstig ein Druck für das gasförmige Medium zwischen 4 und 7 bar erwiesen. Die Zeit zum Zuführen des gasförmigen unter Druck gesetzten Mediums kann sehr kurz gehalten sein, insbesondere von einigen Sekunden bis zu etwa 20 Sekunden.

Das Entlüftungskanalnetz im Entlüftungsbohrungsfeld kann über eine einzige Zuleitung mit dem unter Druck gesetzten gasförmigen Medium versorgt werden. Diese Zuleitung ist insbesondere zumindest eine Bohrung im Segment, in welches das Entlüftungskanalnetz mündet.

Das Entlüftungskanalnetz selbst ist erfindungsgemäß durch eine Anzahl von in Umfangsrichtung des Formsegments verlaufenden Bindungskanäle sowie ferner von Versorgungskanälen gebildet, welche Entlüftungsbohrungen untereinander und/oder mit einem der Verbindungskanäle verbinden.

Die Erfindung zeigt daher eine auf einfache Weise realisierbare Möglichkeit auf, ein Entlüftungsbohrungsfeld in einem Formsegment des Segmentringes mit einem unter Druck zugeführten gasförmigen Medium zu versorgen, ohne dass ein Druckverlust eintritt, sodass die Entformung des Reifens wirkungsvoll unterstützt werden kann.

Besonders einfach und unproblematisch lässt sich das erfindungsgemäße Verfahren mit Druckluft als gasförmiges Medium durchführen.

Das erfindungsgemäße Verfahren ist besonders vorteilhaft bei Entlüftungsbohrungen, in welche Entlüftungseinheiten eingesetzt sind. Wie bekannt verschließen die Entlüftungseinheiten bei eingeformten Reifen und während der Vulkanisation des Reifens die Entlüftungsbohrungen an der Innenseite der Profileinsätze. Durch das unter Druck eingeleitete gasförmige Medium werden sie nach der Vulkanisation des Reifens und unmittelbar vor oder während des Einleitens des Öffnens der Vulkanisationsform geöffnet.

Zum Unterstützen des Entformungsvorganges hat sich als besonders günstig ein Druck für das gasförmige Medium zwischen 4 und 7 bar erwiesen. Die Zeit zum Zuführen des gasförmigen unter Druck gesetzten Mediums kann sehr kurz gehalten sein, insbesondere von einigen Sekunden bis zu etwa 20 Sekunden.

Das Entlüftungskanalnetz im Entlüftungsbohrungsfeld kann über eine einzige Zuleitung mit dem unter Druck gesetzten gasförmigen Medium versorgt werden. Diese Zuleitung ist insbesondere zumindest eine Bohrung im Segment, in welches das Entlüftungskanalnetz mündet.

Das Entlüftungskanalnetz selbst ist erfindungsgemäß durch eine Anzahl von in Umfangsrichtung des Formsegments verlaufenden Bindungskanälen sowie ferner von Versorgungskanälen gebildet, welche Entlüftungsbohrungen untereinander und/oder mit einem der Verbindungskanäle verbinden.

Die Kanäle des Entlüftungskanalnetzes können auf einfache Weise als Vertiefungen, Nuten oder dergleichen in der Außenseite des Profileinsatzes ausgebildet sein.

Die das Entlüftungsbohrungsfeld umlaufende bzw. begrenzende Dichtung ist vorzugsweise eine O-Ringdichtung aus Gummi. Die Dichtung ist insbesondere in eine Vertiefung an der Außenseite des Profileinsatzes eingesetzt und umläuft das Entlüftungsbohrungsfeld.

Weitere Merkmale, Vorteile und Einzelheiten der Erfindung werden nun anhand der Zeichnung, die schematisch ein Ausführungsbeispiel darstellt, näher beschrieben. Dabei zeigen
- Fig. 1: eine Schnittdarstellung eines Formsegmentes einer Reifenvulkanisationsform,
- Fig. 2: eine Schnittdarstellung einer Entlüftungseinheit,
- Fig. 3: eine Außenansicht eines Profileinsatzes und
- Fig. 4: einen Schnitt entlang der Linie IV-IV der Fig. 3, jedoch mit eingelegter Dichtung.

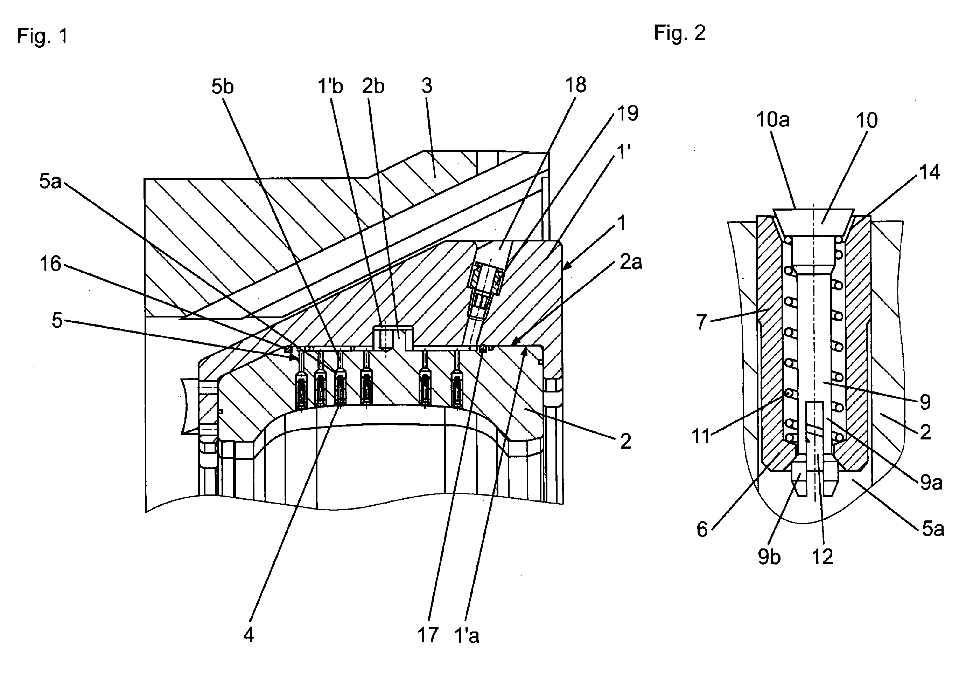

Fig. 1 zeigt im Schnitt einige Bestandteile einer üblichen Vulkanisationsform bzw. Heizform für einen Fahrzeugluftreifen für Personenkraftwagen. Die Vulkanisationsform befindet sich innerhalb einer Heizpresse, deren Bestandteile nicht dargestellt sind und die auf herkömmliche Weise ausgeführt sein kann. Eine derartige Heizpresse weist einen Pressenoberteil und einen Pressenunterteil auf, die mit den üblichen Mechanismen zum Positionieren des zu vulkanisierenden Reifens, zum Betätigen der Formsegmente und Formteile der Vulkanisationsform, zum Einbringen des Heizmediums und zum Entfernen des fertig vulkanisierten Reifens versehen sind.

Fig. 1 zeigt einige Bestandteile einer herkömmlich aufgebauten Containerform. Dargestellt sind ein Schließring 3 und ein Formsegment 1 eines Segmentringes, der insbesondere sechs bis acht zu einem Ring zusammenfügbare Formsegmente 1 aufweist, welche jeweils aus einem Segmentschuh 1' bestehen, an dessen Innenseite ein Profileinsatz 2 befestigt ist. Forminnenseitig sind in den Profileinsätzen 2 in Fig. 1 nicht dargestellte Formstege, Lamellen und dergleichen verankert, die das Profil im Laufstreifen des Reifens ausformen. Die Formsegmente 1 sind gemeinsam mit den Profileinsätzen 2 zum Öffnen der Vulkanisationsform radial auseinander fahrbar, um den fertig vulkanisierten Reifen freizugeben oder einen Rohreifen einzubringen. Der Schließring 3 weist in bekannter Weise eine abgeschrägte Innenfläche auf, welche mit einer gegenseitig abgeschrägten Außenfläche der Formsegmente 1 derart zusammenwirkt, dass zum Schließen der Vulkanisationsform die Formsegmente 1 in radialer Richtung zum geschlossenen Segmentring zusammengefahren werden können.

Eine Vulkanisationsform für PKW-Reifen enthält durchschnittlich etwa 4500 Entlüftungseinheiten 4, die großteils in den Profileinsätzen 2 eingebaut sind. Der in Fig. 1 gezeigte Querschnitt durch einen Profileinsatz 2 zeigt eine Anzahl von Entlüftungsbohrungen 5, welche in radialer Richtung orientiert sind und an der Innenseite des Profileinsatzes 2 Abschnitte 5a aufweisen, die einen größeren Durchmesser besitzen, als die in Richtung Formsegment 1 verlaufenden Abschnitte 5b. In jeder Entlüftungsbohrung 5 befindet sich eine Entlüftungseinheit 4, welche sich ohne eingeformten Reifenrohling in ihrer offenen Position befindet. Die Entlüftungseinheiten 4 sind insbesondere in bekannter Weise, vorzugsweise gemäß der DE 1 195 432 76 C1, ausgeführt. Auf den grundsätzlichen Aufbau und die Wirkungsweise einer Entlüftungseinheit 4 wird nun anhand der Fig. 2 kurz eingegangen.

Die Entlüftungseinheit 4 weist ein zylindrisches Gehäuse 7 auf, in welchem sich ein Einsatz 6 mit einem Ventilschaft 9 und einem Ventilteller 10 befindet, welcher durch eine Druckfeder 11 beaufschlagt über die Innenfläche des Profileinsatzes 2 geringfügig übersteht. Die Druckfeder 11 ist mit ihrem einen Ende an einem umlaufenden Absatz des Ventiltellers 10 und mit ihrem anderen Ende an einem umlaufenden Absatz des Gehäuses 7 abgestützt. Der dem Ventilteller 10 abgewandte Endbereich des Ventilschaftes 9 ist mittig geschlitzt, sodass beidseitig des Schlitzes 12 zwei voneinander beabstandete Schaftfortsätze 9a verlaufen, deren freie Enden einen Bund 9b aufweisen, sodass sich die Schaftfortsätze 9a unter der Wirkung der Druckfeder 11 außenseitig an einer Verengung des Gehäuses 7 abstützen können. Der im wesentlichen kegelstumpfförmig gestaltete Ventilteller 10 verbreitet sich in Richtung Forminnenseite und ist in einer angepassten kegelstumpfförmigen Erweiterung 14 des Gehäuses 7 unter dem von der Forminnenseite vom Reifenrohling ausgeübten Druck versenkbar. Die Außenfläche 10a des Ventiltellers 10 bildet in der versenkten Stellung mit der umgebenden Forminnenseite eine einheitliche Fläche. Die Entlüftungseinheiten 4 werden in die Entlüftungsbohrungen 5 von der Forminnenseite her eingesetzt bzw. eingeschlagen und sind in den beiden Abschnitten 5a der Bohrungen 5 durch Formschluss gehalten.

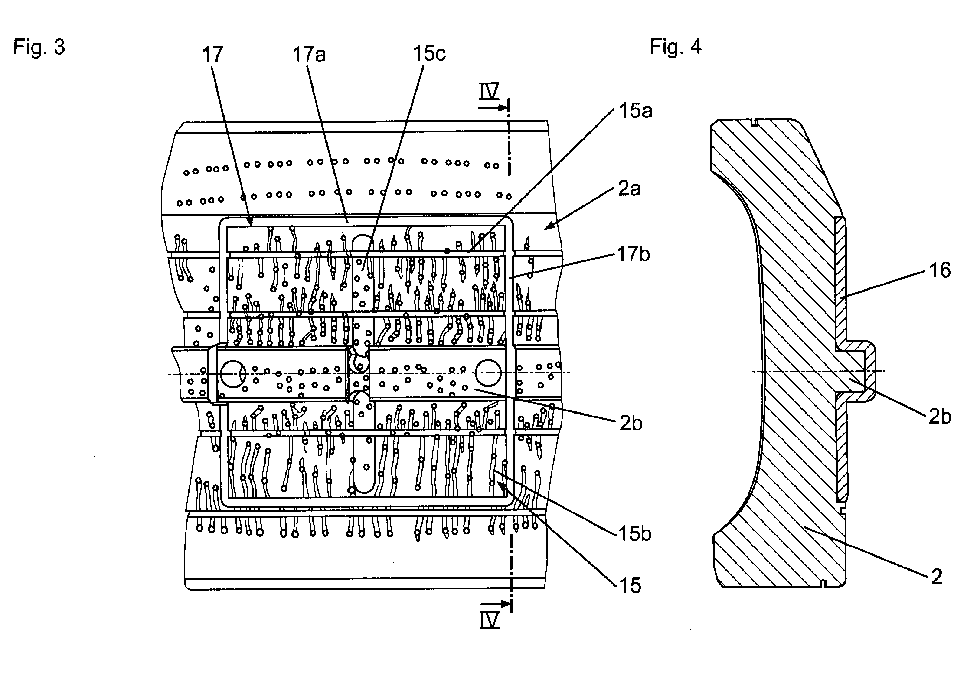

Der Profileinsatz 2 ist seitlich vom Segmentschuh 1' übergriffen und bis auf jene Bereiche, wo ein Entlüftungskanalnetz 15 (Fig. 3) verläuft, mit seiner Außenfläche 2a in Kontakt mit der Innenfläche 1'a des Segmentschuhs 1'. Das Entlüftungskanalnetz 15 weist, wie es Fig. 3 zeigt, eine Anzahl von in Umfangsrichtung des Segmentsringes verlaufende Entlüftungskanäle 15a und von diesen ausgehend Verbindungskanäle 15b zu den Entlüftungsbohrungen 5 auf. Einige Entlüftungsbohrungen 5 sind durch Verbindungskanäle 15b miteinander und daher mit den Kanälen 15a in Verbindung. Die Kanäle 15b sind seichte, ca. 1 mm bis 2 mm tiefe und ca. 1 mm bis 1,5 mm breite Nuten an der Außenseite 2a der Profileinsätze 2, die Kanäle 15a sind um 0,2 mm bis 1 mm tiefer und breiter als die Kanäle 15b. In der Mitte der Außenseite 2a des Profileinsatzes 2 befindet sich ein breiterer Versorgungskanal 15c, in welchen, wie es in Fig. 1 gezeigt ist, eine Bohrung 18 mündet, welche im Segmentschuh 1'a ausgebildet ist. Fig. 1, Fig. 3 und Fig. 4 zeigen ferner einen in Umfangsrichtung an der Außenseite 2a des Profileinsatzes 2 vorgesehenen Zentriervorsprung 2b, welcher in eine Vertiefung 1'b an der Innenseite 1'a des Segmentschuhs 1' eingreift. In die vorzugsweise einen äußeren breiteren und einen inneren schmäleren Abschnitt aufweisende Bohrung 18 ist ein Anschlussflansch 19 eingesetzt, an welchen ein nicht gezeigter Schlauch angeschlossen werden kann.

An der Außenseite 2a jedes Profileinsatzes 2 ist eine in Draufsicht rechteckförmig verlaufende Aufnahmenut 17 ausgebildet, welche zumindest den Großteil jenes Bereiches im Profileinsatz 2, in welchem die Entlüftungsbohrungen 5 ausgebildet sind, demnach ein Entlüftungsbohrungsfeld, umläuft. Die Aufnahmenut 17, deren Tiefe um 0,2 mm bis 2 mm größer ist als die Tiefe der Kanäle 15a und deren Breite 1,5 mm bis 5 mm beträgt, weist zwei in Umfangrichtung verlaufende Abschnitte 17a und zwei zu diesen quer verlaufende Abschnitte 17b auf. Die Abschnitte 17b überqueren den Zentrieransatz 2b. In die Aufnahmenut 17 ist eine insbesondere aus Gummi bestehende Dichtung 16, vorzugsweise eine O-Ringdichtung, eingelegt, die die Außenseite 2a des Profileinsatzes 2 gegenüber der Innenseite 1'a des Segmentschuhs 1' abdichtet. Auf diese Weise ist auch ein Entlüftungsbohrungsfeld gebildet, dessen Entlüftungsbohrungen 5 über das Entlüftungsbohrungsnetz mit der Bohrung 18 in Verbindung sind.

Beim Einformen eines Rohreifens in die Vulkanisationsform stellen die zuerst offenen Entlüftungseinheiten 4 sicher, dass etwaige Luft zwischen dem Rohreifen und der Reifenheizform ungehindert durch die Entlüftungseinheiten 4 entweichen kann. Ist der Rohreifen eingeformt, sind die Entlüftungseinheiten 4 geschlossen. Ist der Reifen fertig vulkanisiert, wird unmittelbar vor dem Öffnen der Vulkanisationsform und gegebenenfalls auch in der ersten Phase des Öffnens über den am Anschlussflansch 19 angeschlossenen Schlauch ein gasförmiges Medium, vorzugsweise Luft, unter einem Druck von insbesondere 4 bis 7 bar über kurze Zeit, insbesondere bis zu 20 Sekunden, eingelassen, wodurch sich die Entlüftungseinheiten 4 öffnen und der Luftstrom Druck auf die Außenseite des Reifens ausübt. Das Entlüftungskanalnetz 15 sorgt für eine prompte Verteilung der Druckluft zu den Entlüftungsbohrungen 5. Die Erfindung unterstützt somit wirkungsvoll das Lösen des fertig vulkanisierten Reifens von den Profileinsätzen 2 und erleichtert dadurch das Entformen des vulkanisierten Reifens.

Die Erfindung ist auf das dargestellte und beschriebene Ausführungsbeispiel nicht eingeschränkt. Insbesondere ist die Erfindung auch auf Vulkanisationsformen anwendbar, bei welchen in der Entlüftungsbohrung keine Entlüftungseinheiten eingebaut sind.

### Bezugsziffernliste

- 1: Segmentring
- 1': Segmentschuh
- 1'a: Innenseite
- 1'b: Vertiefung
- 2: Profileinsatz
- 2a: Außenseite
- 2b: Zentriervorsprung
- 3: Schließring
- 4: Entlüftungseinheit
- 5: Entlüftungsbohrung
- 5a: Abschnitt
- 5b: Abschnitt
- 6: Verengung
- 7: zyl. Gehäuse
- 8: Einsatz
- 9: Ventilschaft
- 9a: Schaftfortsatz
- 9b: Bund
- 10: Ventilteller
- 10a: Außenfläche
- 11: Druckfeder
- 12: Schlitz
- 14: Erweiterung
- 15: Entlüftungskanalnetz
- 15a: Entlüftungskanal
- 15b: Verbindungskanal
- 15c: Versorgungskanal
- 16: O-Ringdichtung
- 17: Aufnahmenut
- 17a: Abschnitt
- 17b: Abschnitt
- 18: Bohrung
- 19: Anschlussflansch

## Patentansprüche

1. Verfahren zur Unterstützung des Entformens eines vulkanisierten Fahrzeugluftreifens aus einer Vulkanisationsform mit den profilierten Laufstreifen formenden Formsegmenten aus jeweils einem Segmentschuh (1') und einem mit diesem verbundenen Profileinsatz (2), welcher mit einer Vielzahl von Entlüftungsbohrungen (4) versehen ist, wobei unmittelbar vor dem Öffnen der Vulkanisationsform bzw. der Formsegmente durch die Entlüftungsbohrungen (4) in Richtung vulkanisiertem Reifen unter Druck ein gasförmiges Medium geleitet wird,
**dadurch gekennzeichnet,**
**dass** das unter Druck zugeführte, gasförmige Medium über ein zwischen dem Segmentschuh (1') und dem Profileinsatz (2) gebildetes Entlüftungskanalnetz (15) in einem Entlüftungsbohrungsfeld verteilt wird, *wobei der Profleinsatz (2) bis auf jene Bereiche, wo das Entlüftungskanalnetz (15) verläuft, mit seiner Außenfläche (2a) in Kontakt mit der Innenfläche (1'a) des Segmentschuhs (1') steht, und wobei das Entlüftungsbohrungsfeld* von einer umlaufenden, den Profileinsatz (2) gegenüber dem Segmentschuh (1') abdichtenden Dichtung (16) begrenzt ist.

2. Verfahren nach Anspruch 1, **dadurch gekennzeichnet, dass** als gasförmiges Medium Druckluft verwendet wird.

3. Verfahren nach Anspruch 1 oder 2, **dadurch gekennzeichnet, dass** in den Entlüftungsbohrungen (5) Entlüftungseinheiten (4) eingesetzt sind, welche mittels des unter Druck eingebrachten gasförmigen Mediums geöffnet werden.

4. Verfahren nach einem der Ansprüche 1 bis 3, **dadurch gekennzeichnet, dass** das gasförmige Medium unter einem Druck von 4 bis 7 bar eingeleitet wird.

5. Verfahren nach einem der Ansprüche 1 bis 4, **dadurch gekennzeichnet, dass** das gasförmige Medium für einen Zeitraum von bis zu 20 Sekunden eingeleitet wird.

6. Vorrichtung zur Unterstützung des Entformens eines vulkanisierten Fahrzeugluftreifens aus einer Vulkanisationsform mit den profilierten Laufstreifen formenden Formsegmenten aus jeweils einem Segmentschuh (1') und einem mit diesem verbundenen Profileinsatz (2), welcher mit einer Vielzahl von Entlüftungsbohrungen (4) versehen ist, wobei in den Formsegmenten jeweils ein Entlüftungskanalnetz (15) vorgesehen ist, durch welches ein gasförmiges Medium unter Druck durch Entlüftungsbohrungen (4) an die Grenzfläche zum Reifen leitbar ist,
**dadurch gekennzeichnet,**
**dass** das Entlüftungskanalnetz (15) zwischen dem Profileinsatz (2) und dem Segmentschuh (1') ausgebildet ist, *wobei der Profileinsatz (2) bis auf jene Bereiche, wo das Entlüftungskanalnetz (15) verläuft, mit seiner Außenfläche (2a) in Kontakt mit der Innenfläche (1'a) des Segmentschuhs (1') steht, und wobei das Entlüftungskanalnetz (15)* von einer ein Entlüftungsbohrungsfeld umlaufenden, den Profileinsatz (2) gegenüber dem Segmentschuh (1') abdichtenden Dichtung (16) begrenzt ist.

7. Vorrichtung nach Anspruch 6, **dadurch gekennzeichnet, dass** das Entlüftungskanalnetz (15) mit zumindest einer Bohrung (18) im Segmentschuh (1'), durch welche das gasförmige Medium einleitbar ist, in Verbindung ist.

8. Vorrichtung nach Anspruch 6 oder 7, **dadurch gekennzeichnet, dass** das Entlüftungskanalnetz (15) eine Anzahl von in Umfangsrichtung des Formsegmentes verlaufende Verbindungskanäle (15a) aufweist.

9. Vorrichtung nach einem der Ansprüche 6 bis 8, **dadurch gekennzeichnet, dass** das Entlüftungskanalnetz (15) Versorgungskanäle (15b) aufweist, welche Entlüftungsbohrungen (5) untereinander und/oder mit einem der Verbindungskanäle (15b) verbinden.

10. Vorrichtung nach einem der Ansprüche 6 bis 9, **dadurch gekennzeichnet, dass** die Kanäle (15a, 15b) des Entlüftungskanalnetzes (15) Vertiefungen, Nuten oder dergleichen in der Außenseite (2a) des Profileinsatzes (2) sind.

11. Vorrichtung nach einem der Ansprüche 6 bis 10, **dadurch gekennzeichnet, dass** die Dichtung (16) eine O-Ringdichtung ist.

12. Vorrichtung nach einem der Ansprüche 6 bis 11, **dadurch gekennzeichnet, dass** die Dichtung (16) in eine Vertiefung (17) in der Außenseite (2a) des Profileinsatzes (2) eingesetzt ist.

13. Vorrichtung nach einem der Ansprüche 6 bis 12, **dadurch gekennzeichnet, dass** die Dichtung (16) das Entlüftungsbohrungsfeld rechteckig umläuft.

## Claims

1. Method for supporting the demoulding of a vulcanized pneumatic vehicle tyre from a vulcanizing mould with mould segments that form the profiled tread and respectively comprise a segment shoe (1') and a profile insert (2), which is connected to said shoe and is provided with a multiplicity of venting holes (4), a gaseous medium being passed through the venting holes (4) under pressure in the direction of the vulcanized tyre before the opening of the vulcanizing mould or the mould segments,
**characterized**
**in that** the gaseous medium supplied under pressure is distributed by way of a network of venting channels (15), formed between the segment shoe (1') and the profile insert (2), in an array of venting holes, the profile insert (2) being in contact by its outer surface (2a) with the inner surface (1'a) of the segment shoe (1') apart from those regions where the network of venting channels (15) extends, and the array of venting holes being bounded by a seal (16) that runs around the periphery and seals the profile insert (2) with respect to the segment shoe (1').

2. Method according to Claim 1, **characterized in that** compressed air is used as the gaseous medium.

3. Method according to Claim 1 or 2, **characterized in that** venting units (4), which are opened by means of the gaseous medium that is introduced under pressure, are fitted in the venting holes (5).

4. Method according to one of Claims 1 to 3, **characterized in that** the gaseous medium is introduced under a pressure of 4 to 7 bar.

5. Method according to one of Claims 1 to 4, **characterized in that** the gaseous medium is introduced for a time period of up to 20 seconds.

6. Device for supporting the demoulding of a vulcanized pneumatic vehicle tyre from a vulcanizing mould with mould segments that form the profiled tread and respectively comprise a segment shoe (1') and a profile insert (2), which is connected to said shoe and is provided with a multiplicity of venting holes (4), a network of venting channels (15), through which a gaseous medium can be passed through venting holes (4) under pressure to the bounding surface with respect to the tyre being respectively provided in the mould segments,
**characterized**
**in that** the network of venting channels (15) is formed between the profile insert (2) and the segment shoe (1'), the profile insert (2) being in contact by its outer surface (2a) with the inner surface (1'a) of the segment shoe (1') apart from those regions where the network of venting channels (15) extends, and the network of venting channels (15) being bounded by a seal (16) that runs around the periphery of an array of venting holes and seals the profile insert (2) with respect to the segment shoe (1').

7. Device according to Claim 6, **characterized in that** the network of venting channels (15) is in connection with at least one hole (18) in the segment shoe (1'), through which the gaseous medium can be introduced.

8. Device according to Claim 6 or 7, **characterized in that** the network of venting channels (15) has a number of connecting channels (15a) running in the circumferential direction of the mould segment.

9. Device according to one of Claims 6 to 8, **characterized in that** the network of venting channels (15) has supply channels (15b), which connect venting holes (5) to one another and/or to one of the connecting channels (15b).

10. Device according to one of Claims 6 to 9, **characterized in that** the channels (15a, 15b) of the network of venting channels (15) are depressions, grooves or the like in the outer side (2a) of the profile insert (2).

11. Device according to one of Claims 6 to 10, **characterized in that** the seal (16) is an O-ring seal.

12. Device according to one of Claims 6 to 11, **characterized in that** the seal (16) is fitted in a depression (17) in the outer side (2a) of the profile insert (2).

13. Device according to one of Claims 6 to 12, **characterized in that** the seal (16) runs around the array of venting holes in a rectangular manner.

## Revendications

1. Procédé de soutien du démoulage d'un pneumatique de véhicule vulcanisé hors d'un moule de vulcanisation avec des segments de moule formant les bandes de roulement profilées constitués chacun d'un sabot de segment (1') et d'un insert profilé (2) connecté à celui-ci, lequel est pourvu d'une pluralité d'alésages de désaérage (4), dans lequel un milieu gazeux est introduit sous pression immédiatement avant l'ouverture du moule de vulcanisation ou des segments de moule à travers les alésages de désaérage (4) dans la direction du pneumatique vulcanisé,
**caractérisé en ce que**
le milieu gazeux acheminé sous pression est distribué dans un champ d'alésages de désaérage par le biais d'un réseau de canaux de désaérage (15) formé entre le sabot de segment (1') et l'insert profilé (2), l'insert profilé (2), à l'exception des régions dans lesquelles s'étend le réseau de canaux de désaérage (15), étant en contact par sa surface extérieure (2a) avec la surface intérieure (1'a) du sabot de segment (1'), et le champ d'alésages de désaérage étant limité par un joint d'étanchéité périphérique (16) étanchéifiant l'insert profilé (2) par rapport au sabot de segment (1').

2. Procédé selon la revendication 1, **caractérisé en ce que** l'on utilise comme milieu gazeux de l'air sous pression.

3. Procédé selon la revendication 1 ou 2, **caractérisé en ce que** des unités de désaérage (4) sont insérées dans les alésages de désaérage (5), lesquelles sont ouvertes au moyen du milieu gazeux introduit sous pression.

4. Procédé selon l'une quelconque des revendications 1 à 3, **caractérisé en ce que** le milieu gazeux est introduit sous une pression de 4 à 7 bar.

5. Procédé selon l'une quelconque des revendications 1 à 4, **caractérisé en ce que** le milieu gazeux est introduit pendant un intervalle de jusqu'à 20 secondes.

6. Dispositif de soutien du démoulage d'un pneumatique de véhicule vulcanisé hors d'un moule de vulcanisation avec des segments de moule formant les bandes de roulement profilées constitués chacun d'un sabot de segment (1') et d'un insert profilé (2) connecté à celui-ci, lequel est pourvu d'une pluralité d'alésages de désaérage (4), un réseau de canaux de désaérage (15) étant à chaque fois prévu dans les segments de moule, à travers lequel un milieu gazeux sous pression peut être introduit sous pression à travers des alésages de désaérage (4) au niveau de la surface limite avec le pneumatique,
**caractérisé en ce que**
le réseau de canaux de désaérage (15) est réalisé entre l'insert profilé (2) et le sabot de segment (1'), l'insert profilé (2), à l'exception des régions dans lesquelles s'étend le réseau de canaux de désaérage (15), étant en contact par sa surface extérieure (2a) avec la surface intérieure (1'a) du sabot de segment (1'), et le réseau de canaux de désaérage (15) étant limité par un joint d'étanchéité entourant un champ d'alésages de désaérage (16) étanchéifiant l'insert profilé (2) par rapport au sabot de segment (1').

7. Dispositif selon la revendication 6, **caractérisé en ce que** le réseau de canaux de désaérage (15) est en liaison avec au moins un alésage (18) dans le sabot de segment (1'), à travers lequel le milieu gazeux peut être introduit.

8. Dispositif selon la revendication 6 ou 7, **caractérisé en ce que** le réseau de canaux de désaérage (15) présente une pluralité de canaux de liaison (15a) s'étendant dans la direction périphérique du segment de moule.

9. Dispositif selon l'une quelconque des revendications 6 à 8, **caractérisé en ce que** le réseau de canaux de désaérage (15) présente des canaux d'alimentation (15b) qui relient des alésages de désaérage (5) entre eux et/ou à l'un des canaux de liaison (15b).

10. Dispositif selon l'une quelconque des revendications 6 à 9, **caractérisé en ce que** les canaux (15a, 15b) du réseau de canaux de désaérage (15) sont des renfoncements, des rainures ou similaires dans le côté extérieur (2a) de l'insert profilé (2).

11. Dispositif selon l'une quelconque des revendications 6 à 10, **caractérisé en ce que** le joint d'étanchéité (16) est un joint torique.

12. Dispositif selon l'une quelconque des revendications 6 à 11, **caractérisé en ce que** le joint d'étanchéité (16) est inséré dans un renfoncement (17) dans le côté extérieur (2a) de l'insert profilé (2).

13. Dispositif selon l'une quelconque des revendications 6 à 12, **caractérisé en ce que** le joint d'étanchéité (16) entoure le champ d'alésages de désaérage sous forme rectangulaire.
